# EUROPÄISCHE PATENTSCHRIFT

(11) **EP 3 548 833 B1**
(45) Veröffentlichungstag und Bekanntmachung des Hinweises auf die Patenterteilung: **27.10.2021**
(21) Anmeldenummer: 17828650.6
(22) Anmeldetag: 01.12.2017
(51) Int. Cl.: F41H 11/02, F41H 13/00, F41F 3/042, F41F 3/077, F42B 12/66, F42B 10/62

(54) **STARTANORDNUNG MIT EINEM FLUGKÖRPER ZUM ABFANGEN VON FREMDDROHNEN**
LAUNCHING ARRANGEMENT WITH A MISSILE FOR INTERCEPTING HOSTILE DRONES
DISPOSITIF DE LANCEMENT AVEC MISSILE POUR INTERCEPTER DES DRONES HOSTILES

(30) Priorität: 02.12.2016 US 201662429153 P
(43) Veröffentlichungstag der Anmeldung: 09.10.2019
(73) Patentinhaber: Skysec GmbH, 8488 Turbenthal (CH)
(72) Erfinder: METZ, Manuel, 8356 Ettenhausen (CH); METZ, Franco, 8547 Gachnang (CH)
(74) Vertreter: Kirschner, Sebastian
(86) Internationale Anmeldenummer: PCT/EP2017/001403
(87) Internationale Veröffentlichungsnummer: WO 2018/099604

(56) Entgegenhaltungen:
- EP-A1- 2 042 826
- EP-A1- 2 979 979
- DE-A1- 2 935 044
- DE-A1- 2 946 002
- US-A1- 2011 168 838
- US-B1- 6 626 077
- US-B1- 9 175 934
- US-B2- 8 387 540

## Beschreibung

Die Erfindung betrifft eine Startanordnung mit einem Flugkörper zum Abfangen von Fremddrohnen mit den Merkmalen des Patentanspruches 1. Die Startanordnung weist einen Startbehälter mit einer Öffnung auf, wobei der Flugkörper innerhalb des Startbehälters angeordnet oder anordbar ist. Der Flugkörper weist ein Fangnetz auf, wobei an dem Fangnetz mehrere Gewichte befestigt sind. Das Fangnetz und die Gewichte können zu einem gegebenen Zeitpunkt ausgestoßen werden, um eine Fremddrohne einzufangen. Die Fremddrohne verheddert sich dabei in dem Fangnetz und kann ihre geplante Flugroute nicht weiter fortsetzen.

Aus der gattungsbildenden EP 0 175 914 A1 sind ein Flugkörper in Form eines Geschosses zum Bekämpfen von freibeweglichen Objekten und eine Startanordnung bekannt. Das Geschoss wird durch eine Schubkraft in Richtung eines zu bekämpfenden Objektes bewegt. Im bestimmten Abstand zum Objekt wird ein Fangnetz derart aus einem Hülsenkörper ausgestoßen, so dass das Fangnetz großflächig entfaltet wird. Das Fangnetz entfaltet sich dabei in Flugrichtung gesehen hinter dem Geschoss. Das Fangnetz ist an einem hinteren Teil des Geschosses vor dem Ausstoß gelagert. Das Geschoss kann beispielsweise aus einem Kanonenrohr oder einem Kanister abgeschossen oder aber mittels eigener, von geeigneten Mitteln erzeugter Schubkraft in Richtung des zu bekämpfenden Objektes bewegt werden. Das Geschoss kann gelenkt, umgelenkt, ballistisch oder aerodynamisch oder hydrodynamisch von einer geeigneten Abschussvorrichtung auf das Objekt gerichtet werden. Das Geschoss kann als Drohne ausgebildet sein. Vor Erreichen des zu bekämpfenden Objektes wird durch Zünden eines Zündorgans und somit durch die Wirkung einer gezündeten Treibladung ein Bodenteil des Flugkörpers an einer Sollbruchstelle aus einem Hülsenkörper ausgestoßen. Der Hülsenkörper wird dabei zusammen mit dem Bodenteil und mit dem Zündorgan in zwei symmetrische Teilstücke getrennt. In einer Ausgestaltung sind die Hülsenteile dabei über Federmittel mit dem Fangnetz verbunden, wobei diese Hülsenteile nach dem Aufsprengen als Gewichte dienen, die das Fangnetz aufspannen.

Aus der US 6,626,077 B1 ist ein Flugkörper zum Abfangen von anderen Flugobjekten mit einem Fangnetz bekannt. An dem Fangnetz sind mehrere Gewichte umfänglich befestigt. Als Flugkörper kann dabei eine Rakete oder ein bemanntes oder unbemanntes Flugobjekt dienen. Der Flugkörper weist einen Kopf mit dem Fangnetz auf, wobei der Kopf mittels einer Sprengladung aufsprengbar ist, wobei Gehäuseteile des Kopfes als Gewichte dienen, um das Fangnetz aufzuspannen. Da das Fangnetz am Kopf des Flugkörpers angeordnet ist, besteht hier die Gefahr, dass durch das Aufspannen des Fangnetzes nicht der fremde Flugkörper gefangen wird, sondern durch die starke Bremswirkung des Fangnetzes der eigene Flugkörper durch das Netz eingefangen wird und somit die eigentliche Fangwirkung gegenüber dem Fremdflugkörper nicht eintritt. An dem Fangnetz sollen mehrere Fallschirme angebracht sein, die den eingefangenen Fremdflugkörper zusammen mit dem Fangnetz beim Fall zum Boden abbremsen.

Aus der RU 249 0 584 C1 ist ein Flugkörper zum Abfangen von Fremddrohnen bekannt. Der Flugkörper ist als eine Art Modellflugzeug mit einem Flugzeugrumpf, Tragflächen und einem Leitwerk ausgebildet. Der Flugkörper weist mehrere Fangnetze auf, an deren Enden Gewichte befestigt sind. In dem Flugkörper sind vier Kassetten mit Fangnetzen enthalten. Die Gewichte sind dabei innerhalb der Kassetten angeordnet. Die Kassetten sind rechts, links, ober- und unterhalb des Flugzeugrumpfes angeordnet. Ferner ist in den Kassetten jeweils ein Fallschirm angeordnet. Der Flugkörper wird vom Boden aus beim Eintritt einer Fremddrohne so gesteuert, dass die Fremddrohne von hinten angeflogen wird. Wenn die Fremddrohne bis auf 500 m erreicht worden ist, wird mittels einer Videokamera die Fremddrohne erfasst, wobei der Bediener nun die Fluggeschwindigkeit an die Fluggeschwindigkeit der Fremddrohne anpasst. Wenn nun einer der Sensoren am Flugzeugrumpf die Fremddrohne erfasst, so werden automatisch das Netz und die Gewichte zusammen ausgeschossen. Wenn die Fremddrohne durch das Netz eingefangen worden ist, werden pyrotechnische Kartuschen gezündet, die das Gehäuse der Kassetten absprengen und einen Fallschirm freigeben.

Es hat sich herausgestellt, dass es in der Praxis schwierig ist, das Fangnetz während des Fluges zu entfalten und die Fremddrohne sicher einzufangen.

Aus der EP 2 979 979 A1 ist eine Startanordnung umfassend einen Flugkörper zum Abfangen von Fremddrohnen bekannt, wobei die Startanordnung einen Startbehälter mit einer Öffnung aufweist, wobei der Flugkörper innerhalb des Startbehälters angeordnet und/oder anordenbar ist und der Flugkörper einen Propellerantrieb aufweist. Der Propellerantrieb ist in einem Bugbereich des Flugkörpers angeordnet. Der Flugkörper ist als Abfangdrohne ausgebildet und weist zwei gegenläufige Propeller auf, die entsprechend im Bugbereich des Flugkörpers angeordnet sind.

Aus der DE 29 35 044 A1 ist ein unbemannter, aus einem Transportbehälter zu startender Flugkörper bekannt. Der Flugkörper weist ein Raketentriebwerk für die Startphase und einen Propellerantrieb für den Marschflug auf. Der Propellerantrieb ist wiederum an einem hinteren Bereich des Flugkörpers angeordnet. Der Startbehälter weist eine frontseitige Startöffnung auf, die durch eine Klappe zu veschließen ist.

Die eingangs beschriebene Startanordnung ist noch nicht optimal ausgebildet. Es hat sich als schwierig herausgestellt eine Startanordnung bereitzustellen, die aus einem Startbehälter gestartet werden kann und gleichzeitig sicher eine Fremddrohne abfangen kann.

Der Erfindung liegt daher die Aufgabe zugrunde, die Startanordnung und den zugehörigen Flugkörper zu verbessern.

Diese der Erfindung zugrunde liegende Aufgabe wird nun durch einen Flugkörper mit den Merkmalen des Patentanspruches 1 gelöst.

Der Flugkörper weist einen Propellerantrieb in einem Bugbereich des Flugkörpers auf. Der Flugkörper hat einen Propellerantrieb im vorderen Bereich seines Rumpfes. Der Antrieb ist vor dem Schwerpunkt des Flugkörpers angeordnet. Dies hat den Vorteil, dass die Gewichte und das Fangnetz hinter dem Antrieb anordbar sind. Dies vereinfacht das Einfangen der Fremddrohne. Es ist nicht notwendig, den Flugkörper aus dem Startbehälter herauszuschießen. Dies hat den Vorteil, dass ein Fangnetz im hinteren Teil des Flugkörpers untergebracht werden kann und der Startbehälter gleichzeitig konstruktiv einfach und kostengünstig ausgestaltet werden kann. Dadurch, dass der Antrieb im Bugbereich angeordnet ist, kann der Flugkörper aus eigener Kraft aus dem Startbehälter starten und muss nicht von der Startanordnung durch einen externen Antrieb abgeschossen werden. Dies vereinfacht den Aufbau der Startanordnung.

Der Propellerantrieb weist vorzugsweise einen Elektromotor auf. Dies ermöglicht es, dass der Antrieb auf einfache Weise, schnell gestartet werden kann.

Die Gewichte sind vorzugsweise im Bereich des Schwerpunkts des Flugkörpers angeordnet. Dies verbessert die Wendigkeit des Flugkörpers.

Der Startbehälter ist mit einem die Öffnung verschließenden Deckel ausgestattet, wobei der Startbehälter und der Deckel über einen betätigbaren Verschlussmechanismus miteinander verbunden sind, wobei beim Betätigen des Verschlussmechanismus der Verschlussmechanismus den Deckel freigibt und der Flugkörper den Startbehälter verlassen kann. Dies hat den Vorteil, dass der Flugkörper vor dem Start in dem Startbehälter geschützt angeordnet ist. Der Flugkörper kann nach einer Aktivierung des Propellerantriebs den Deckel aufdrücken.

Der Verschlussmechanismus ist über eine Verbindungsleitung mit einer Bordelektronik des Flugkörpers gekoppelt, wobei mittels der Bordelektronik des Flugkörpers ein Signal zum Öffnen des Deckels an den Verschlussmechanismus sendbar ist. Dies hat den Vorteil, dass der Behälter und der Verschlussmechanismus mit keiner aufwendigen Elektronik ausgestattet werden müssen. Alle sensibleren, elektronischen Bauteile sind im Flugkörper enthalten. Dies ermöglicht es, die Kosten für die Startanordnung gering zu halten und gleichzeitig den Startbehälter mit dem Verschlussmechanismus robust gegen Witterungseinflüsse herzustellen, was eine längere Lebensdauer des Behälters und des Verschlussmechanismus ermöglicht.

Der Startbehälter weist in seinem Inneren mindestens ein, insbesondere mehrere Führungselemente aufweist, wobei der Flugkörper von den Führungselementen geführt wird. Dies gewährleistet, dass der Flugkörper beim Start den Startbehälter sicher verlassen kann ohne sich an der Innenwand des Startbehälters zu verhaken od. dgl.

Die Startanordnung weist vorzugsweise eine Stromversorgung auf, wobei die Stromversorgung den elektrisch betätigbaren Verschlussmechanismus speist. Dies hat den Vorteil, dass eine Energieversorgung des Flugkörpers nicht beim Starten durch das Entriegeln des Verschlussmechanismus belastet wird. Der Flugkörper kann als Energieversorgung einen Akkumulator oder eine Batterie aufweisen.

Im Folgenden darf auf die Ausgestaltung und die Vorteile des zu verwendenden Flugkörpers näher eingegangen werden.

Das Fangnetz ist mittels eines ersten Mittels und die Gewichte sind mittels eines zweiten Mittels abstoßbar, wobei die Gewichte und das Fangnetz zu unterschiedlichen Zeitpunkten vom Flugkörper abstoßbar sind. Dies stellt das Aufspannen des Fangnetzes sicher. Das Fangnetz ist zunächst innerhalb eines Behälters des Flugkörpers angeordnet. Der Behälter des Flugkörpers wird als erstes abgestoßen, beispielsweise durch Druckluft oder durch mindestens einen pyrotechnischen Treibsatz. Erst danach werden in einem zweiten Schritt die mit dem Umfang des Fangnetzes über flexible Verbindungsmittel, bspw. Seile, verbundenen Gewichte vom Flugkörper abgestoßen. Hierdurch wird das Fangnetz zunächst aus dem Behälter herausgezogen. Dies stellt sicher, dass beim Abstoßen der Gewichte das Fangnetz zwar noch nicht entfaltet, aber bereits entrollt ist. Dadurch ist die Gefahr verringert, dass das Fangnetz sich vor dem Einfangen der Fremddrohne verheddert. Der Behälter ist an einem hinteren Bereich des Flugkörpers angeordnet. Der Behälter bildet insbesondere das Ende des Rumpfes des Flugkörpers. Der Behälter wird entgegen der Flugrichtung, d.h. nach hinten abgestoßen. Das Fangnetz befindet sich in einem Behälter, der den Heckbereich des Flugkörpers bildet. Der Behälter ist durch das erste Mittel abstoßbar. Die Gewichte sind mit flexiblen Verbindungsmitteln verbunden, die von den Gewichten zum Fangnetz führen. Diese Verbindungsmittel werden aus dem Behälter geführt und außen am Rumpf bis zu den Gewichten geführt, die dort in dafür vorgesehene Ausstoßbuchsen gesteckt sind. Die Ausstoßbuchsen sind so verteilt, dass diese voneinander wegzeigen. Das Aufspannen des Fangnetzes läuft somit in zwei Phasen ab. In der ersten Phase wird der Behälter mit dem Fangnetz nach hinten ausgestoßen. Nach einer bestimmten definierten Zeit, nachdem das Netz mehrheitlich den Behälter und den Rumpf verlassen hat, werden die Gewichte aus den Ausstoßbuchsen ausgestoßen. Diese Zeit hängt vorzugsweise von der Eigengeschwindigkeit des Flugkörpers ab. Die Ausstoßkraft ist so groß, dass das Fangnetz durch die Gewichte aufgespannt wird. Die Netzausstoßsequenz wird oder kann auf unterschiedliche Art und Weise ausgelöst werden, nämlich durch eine Sensorik in einem Suchkopf mit bspw. einem Annäherungsradar, mit einem stereobildgebenden System oder mit einem Ultraschallsensor oder durch eine reine externe Auslösung über eine kabellose Verbindung. Ferner ist eine distanzbasierte Auslösung der Netzausstoßsequenz denkbar.

Insbesondere weist der Flugkörper mehrere Flügel auf. Vorzugsweise weist der Flugkörper vier Flügel auf, um den Flugkörper in alle Querrichtungen gleich beschleunigen zu können. Die Führungselemente der Startanordnung führen vorzugsweise die Flügel des Flugkörpers. Die Führungselemente können U-förmige Schlitze aufweisen, wobei vor dem Start die Flügel in diese Schlitze eingreifen. Das offene Ende der Schlitze zeigt dabei in Richtung der Öffnung des Startbehälters.

Der Antrieb des Flugkörpers ist so realisiert, dass vor dem Antrieb und/oder hinter dem Antrieb zusätzliche Elektronik montiert werden kann bzw. montiert ist. Der Flugkörper weist eine Raketenform auf, wodurch eine hohe Endgeschwindigkeit erreichbar ist. Die Endgeschwindigkeit liegt vorzugsweise bei mehr als 100 km/h, vorzugsweise bei mehr als 200 km/h.

Im mittleren und hinteren Bereich des Flugkörpers sind insbesondere ein Fallschirm und das Fangnetz angeordnet. Diese können über die Bordelektronik oder über einen externen Steuerbefehl ausgestoßen werden. Die Bordelektronik kann autonom oder manuell ein elektrisches Signal auslösen, welches in beliebiger zeitlicher Sequenz den Fallschirm, die Gewichte mittels Ausstoßbuchsen und das Behältnis ausstoßen können.

Die Bordelektronik des Flugkörpers ist in der Lage, den Flugkörper autonom oder mit externen Steuerbefehlen zu lenken oder zu navigieren. Die Steuerung des Flugkörpers erfolgt über aerodynamische Steuerflächen und/oder über das Schwenken des Antriebs.

Der Flugkörper findet das anzufliegende Objekt mit Hilfe eines Suchkopfes. Der Suchkopf ist vorzugsweise vor dem Antrieb angeordnet. Der Suchkopf kann entweder ein Radar oder ein optisches System aufweisen.

Der Flugkörper dient dazu, das sich im Inneren des Behälters befindliche Fangnetz zu einem anderen Flugkörper oder Objekt zu befördern. Dieses kann sich in der Luft oder am Boden befinden. Die Navigation geschieht autonom oder durch manuelle Steuerbefehle. Dem Flugkörper werden mit Hilfe einer kabellosen Datenverbindung Informationen über den Ort oder die Richtung des anzufliegenden Objektes gesendet.

Der Start des Flugkörpers erfolgt mittels der Startanordnung aus dem Startbehälter. Die Landung des Flugkörpers erfolgt mit einem Fallschirm. Der Fallschirm ist zunächst innerhalb des Flugkörpers angeordnet. Es ist denkbar, mehrere Fallschirme im Flugkörper anzuordnen, wobei mindestens einer der Fallschirme mit dem Flugkörper und mindestens einer der Fallschirme mit dem Fangnetz verbunden ist.

Mit einem Netzrand des Fangnetzes sind vorzugsweise in gleichen Abständen mehrere Gewichte, insbesondere vier Gewichte verbunden. Die flexiblen Verbindungen können dabei durch Schnüre, Leinen, Seile, Drähte, Ketten oder dgl. gebildet sein. Die Gewichte sind vorzugsweise jeweils mit einem Seil am Fangnetz befestigt. Die Gewichte dienen zum Aufspannen des Fangnetzes. Wenn alle Gewichte voneinander weggezogen werden, wird das Fangnetz aufgespannt. Das Fangnetz ist mit dem Flugkörper über eine weitere flexible Verbindung, wie bspw. einem Seil, einem Draht, einer Kette od. dgl., verbunden, so dass, wenn etwas mit dem Fangnetz eingefangen wird, das Fangnetz und das eingefangene Objekt mit dem Flugkörper und somit auch mit dem Fallschirm verbunden sind.

Damit der Flugkörper und auch mögliche eingefangene Objekte mit möglichst wenig Schaden zu Boden gebracht werden können, wird ein Fallschirm verwendet, der mit dem Flugkörper verbunden ist. Der Fallschirm befindet sich vorzugsweise vor dem Fangnetz. Der Fallschirm ist mit dem Fangnetz verbunden und wird bei einem Treffer automatisch durch die Bremswirkung bzw. die Verzögerung der eingefangenen Fremddrohne im Fangnetz ausgelöst. Wird das Ziel verfehlt, wird der Fallschirm nach einer definierten Zeit von der Bordelektronik ausgestoßen. Das Fangnetz zieht den Fallschirm aus dem Flugkörper, sobald ein Objekt bspw. die Fremddrohen im Netz gefangen wird und dieses Objekt eine Verzögerung bzw. eine Kraft auf ein Verbindungsseil entwickelt. In einem vorderen Bereich ist vorzugsweise eine Auswurfladung angeordnet, die dazu dient den Fallschirm bei einem Fehltreffer auszustoßen. Es ist denkbar mehrere Falschschirme im Flugkörper anzuordnen, wobei mindestens einer der Fallschirme mit dem Flugkörper und mindestens einer der Fallschirme mit dem Fangnetz verbunden ist.

Vorzugsweise weist der Flugkörper eine austauschbare Einheit auf, wobei die austauschbare Einheit den Behälter für den Fallschirm und ein Rumpfteil mit einem Hohlraum für den Fallschirm aufweist. Diese austauschbare Einheit weist ferner vorzugsweise die Ausstoßbuchsen für die Gewichte auf. Die austauschbare Einheit ist vorzugsweise über eine Rast- oder eine Bajonettverbindung mit dem vorderen Rumpfteil verbindbar bzw. verbunden. Die Verwendung einer austauschbaren Einheit mit dem Fangnetz, den Gewichten und dem Fallschirm sowie den zugeordneten Mitteln zum Ausstoßen derselben hat den Vorteil, dass der Flugkörper nach einem Abfangversuch schnell wieder einsatzbereit gemacht werden kann, in dem eine neue austauschbare Einheit an dem Rumpfteil mit dem Antrieb angeschlossen wird. Die Verwendung einer austauschbaren Einheit hat den Vorteil, dass der Fallschirm und/oder das Fangnetz nicht jedes Mal wieder gefaltet und aufgerollt werden müssen, um den Flugkörper einsatzfähig zu machen. Der Rumpfteil der austauschbaren Einheit weist einen in Richtung des Behälters offenen Hohlraum auf, wobei in dem Hohlraum der Fallschirm angeordnet ist. Der Fallschirm ist dabei einerseits mit dem Fangnetz über ein flexibles Verbindungsmittel, bspw. eine Leine, ein Seil oder dergleichen verbunden und vorzugsweise andererseits mit einem Boden oder einer Seitenwand des Rumpfteils, so dass mittels des Fallschirms sowohl das Fangnetz mit der Fremddrohne als auch der Flugkörper selbst gelandet werden kann. Das Rumpfteil ist vorzugsweise über einen elektronischen oder optischen Kontakt mit der Bordelektronik und/oder einer Stromversorgung gekoppelt, damit die Ausstoßbuchsen und/oder die Mittel zum Abstoßen des Behälters und/oder die Mittel zum Ausstoßen des Fallschirms während des Fluges ausgelöst werden können.

Sobald ein Zielobjekt, respektive dessen Position oder Richtungsvektor erkannt worden ist, kann der Flugkörper gestartet werden. Der Flugkörper fliegt das Ziel mit Hilfe der Bordelektronik und den Positionsdaten des Zieles an, welche über ein Datenlink der Bordelektronik zur Verfügung gestellt werden. Zusätzlich kann die Zielführung durch einen Suchkopf unterstützt werden. Bevor der Flugkörper das Zielobjekt kreuzt oder auf dem Zielobjekt auftrifft, wird der Behälter mit Fangnetz ausgestoßen und sequentiell werden die Gewichte am Rand des Fangnetzes ausgestoßen, so dass sich das Fangnetz hinter dem Flugkörper entfaltet. Sobald das Zielobjekt sich im Fangnetz verfängt, zieht das Fangnetz mit dem eingefangenen Zielobjekt den Fallschirm aus dem Flugkörper. Falls kein Objekt mit dem Fangnetz eingefangen wird, wird der Fallschirm ausgestoßen. Der Flugkörper kann auch jederzeit nach dem Start mittels des Fallschirms gelandet werden.

Der Flugkörper kann auf unterschiedliche Art und Weisen gestartet werden, um ein möglichst breites Einsatzspektrum abdecken zu können. Der Flugkörper ist fähig senkrecht oder in einem Winkel kleiner als 90° zur Erdoberfläche selbstständig aus eigener Kraft zu starten. Der Flugkörper kann somit erfindungsgemäß aus einem Startbehälter starten.

Es gibt nun eine Vielzahl von Möglichkeiten, den erfindungsgemäßen Flugkörper in vorteilhafter Art und Weise ausgestalten und weiterzubilden. Hierfür darf zunächst auf die dem Patentanspruch 1 nachgeordneten Patentansprüche verwiesen werden. Im Folgenden werden bevorzugte Ausgestaltungen der Erfindung anhand der Zeichnung und der dazugehörigen Beschreibung näher erläutert. In der Zeichnung zeigt:
- Fig.1: in einer schematischen Ansicht einen Flugkörper zum Abfangen von Fremddrohnen,
- Fig. 2: in einer schematischen Seitenansicht den Flugkörper aus Fig. 1, wobei hier nun bereits ein Fangnetz und ein Fallschirm ausgestoßen worden sind,
- Fig. 3: in einer schematischen Schnittansicht einen Teil des Flugkörpers aus Fig. 1 und 2, nämlich einen hinteren Rumpfteil, der eine austauschbare Einheit bildet und das Fangnetz und den Fallschirm aufweist,
- Fig. 4: in einer schematischen Darstellung eine Flugbahn des Flugkörpers, wobei eine Fremddrohne eingefangen wird,

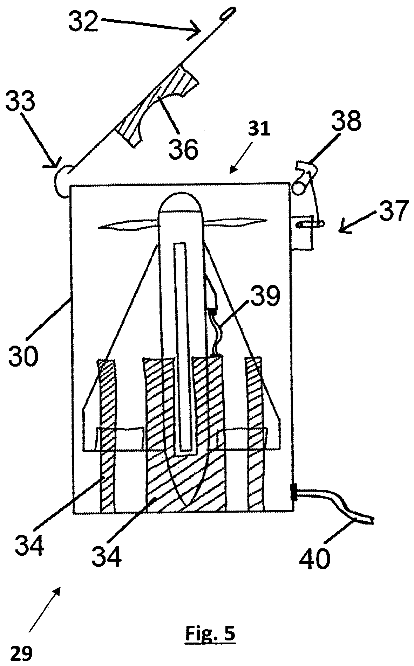

- Fig. 5: in einer schematischen Schnittansicht einen Behälter mit dem Flugkörper, wobei der Flugkörper selbstständig aus dem Behälter starten kann,

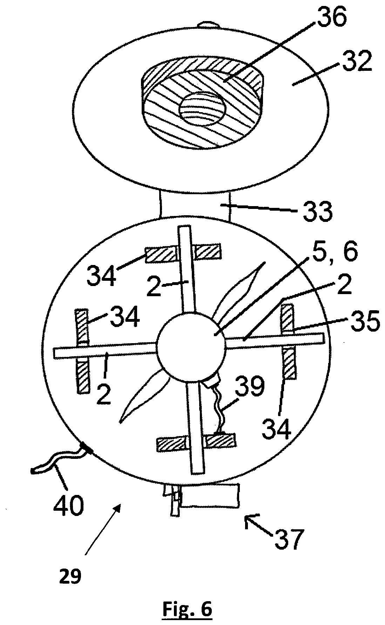

- Fig. 6: in einer schematischen Draufsicht den geöffneten Behälter mit dem Flugkörper,

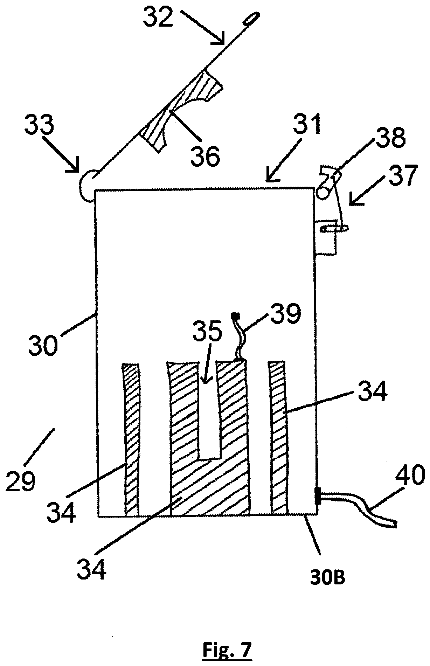

- Fig. 7: in einer schematischen Schnittdarstellung den geöffneten Behälter ohne Flugkörper, und

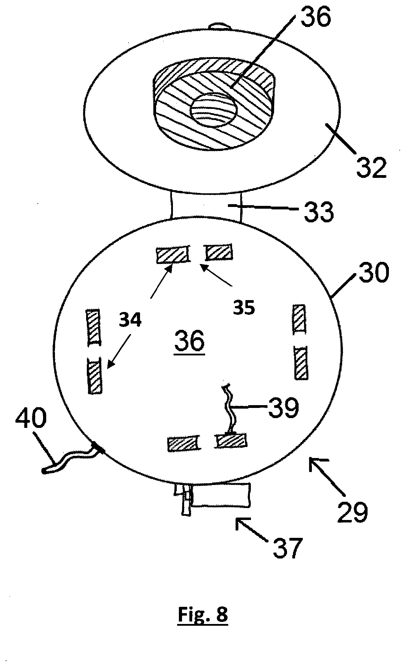

- Fig. 8: in einer schematischen Draufsicht den Behälter ohne Flugkörper.

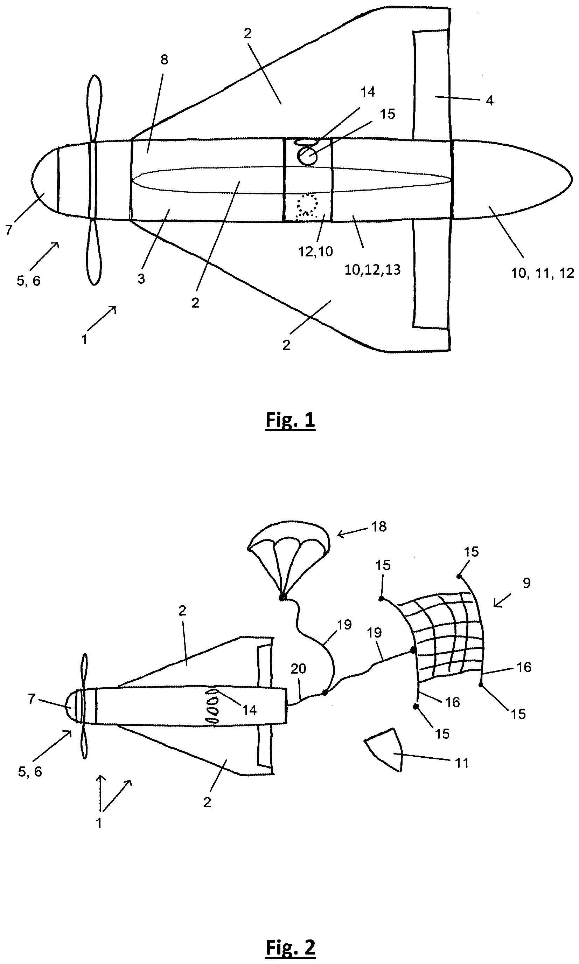

In den Fig. 1 bis 4 ist ein Flugkörper 1 gut zu erkennen, der Teil einer erfindungsgemäßen Startanordnung 29 bildet. Der Flugkörper 1 weist die Form einer Rakete auf. Der Flugkörper 1 weist mehrere Flügel 2, insbesondere drei oder mehr Flügel 2 auf, wobei jeder Flügel 2 insbesondere ein Ruder 4 aufweist. Insbesondere sind vier Flügel 2 umfänglich gleichmäßig beabstandet um einen Rumpf 3 angeordnet.

In einem vorderen Bereich des Rumpfes 3 ist ein Antrieb 5, insbesondere in Form eines Propellerantriebs 6 vorhanden. Der Antrieb 5 weist vorzugsweise einen Elektromotor auf. Die Form des Flugkörpers 1 ist derart gewählt, dass der Flugkörper 1 mittels der Ruder 4 um alle Querachsen leicht gesteuert werden kann. Die Flügel 2 sind im hinteren Bereich des Flugkörpers 1 breiter als im vorderen Bereich, d.h. sie laufen im Wesentlichen in Richtung des Antriebs spitz auf den Rumpf 3 zu. Hierdurch hat der Flugkörper 1 im Wesentlichen die Form einer Rakete, was eine hohe Endgeschwindigkeit erlaubt. Die Endgeschwindigkeit des Flugkörpers 1 liegt bei vorzugsweise mehr als 100 km/h, insbesondere bei mehr als 200 km/h, vorzugsweise im Bereich zwischen 250 km/h und 350 km/h. Dies stellt sicher, dass der Flugkörper 1 mit einer hohen Differenzgeschwindigkeit zu einer Fremddrohne 21 eingesetzt werden kann, was das Einfangen der Fremddrohne 21 mit dem vorliegenden Flugkörper 1 erleichtert.

Die Spitze des Rumpfes 3 ist durch einen Suchkopf 7 gebildet, wobei der Suchkopf 7 mindestens einen, insbesondere mehrere Sensoren aufweist. Der Suchkopf 7 ist vor dem Antrieb 5 angeordnet. Die Sensoren können elektrooptische Sensoren oder Radarsensoren aufweisen. Es ist denkbar, dass der Suchkopf 7 als optisches System eine Kamera, insbesondere eine 4K-Kamera aufweist.

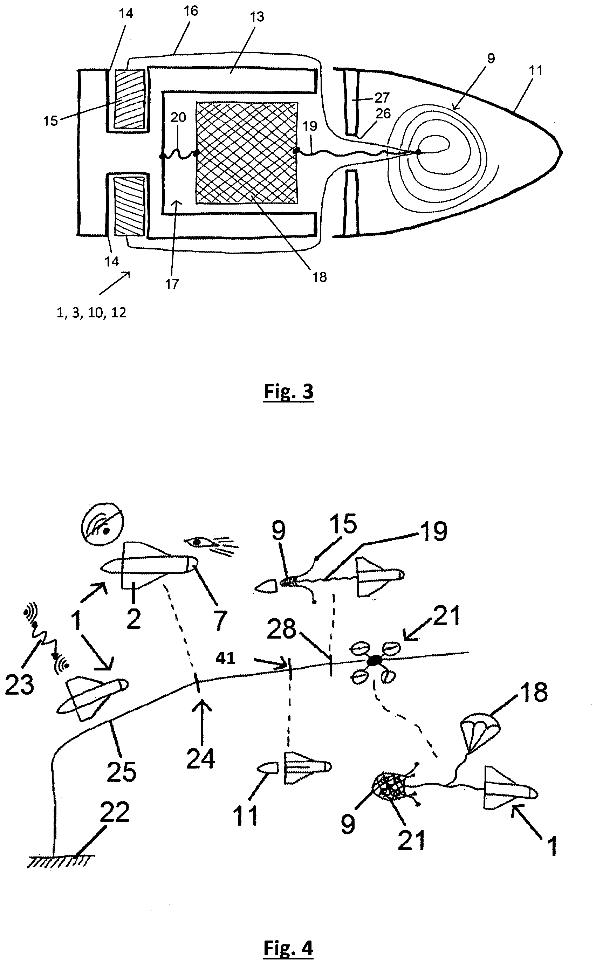

Hinter dem Antrieb 5 weist der Rumpf 3 ein mittleres Rumpfteil 8 auf. Vorzugsweise sind innerhalb des mittleren Rumpfteils 8 die Bordelektronik und/oder eine Energieversorgung angeordnet. Zum Einfangen der Fremddrohne 21 weist der Flugkörper 1 nun ein Fangnetz 9 auf, welches in Fig. 3 verpackt in einem hinteren Rumpfteil 10, nämlich insbesondere in einem Behälter 11 am Ende des hinteren Rumpfteils 10 angeordnet ist. Der Innendurchmesser des Behälters 11 ist größer als eine Öffnung 26 im Boden 30B des Behälters, so dass das Fangnetz 9 erst nach und nach herausgezogen wird, um ein Verheddern zu vermeiden. Durch die Öffnung 26 sind flexible Verbindungsmittel 16, 19 geführt, die das Fangnetz 9 mit den Gewichten 15 und einem Fallschirm 18 verbinden.

Das Fangnetz 9 ist in Form eines aufgewickelten Strangs im Behälter 11 angeordnet und bildet somit eine Wicklung. Ein mit den Gewichten 15 verbundenes Ende des Stranges liegt in der Wicklung innen und ein freies Strangende liegt an der Wicklung außen, d.h. an der Innenwand des Behälters 11. Durch diese spiralförmige Wicklung wird sichergestellt, dass das Fangnetz 9 beim Abstoßen des Behälters 11 nach und nach herausgezogen wird, ohne sich zu verheddern.

In Fig. 2 ist der entfaltete Zustand des Fangnetzes 9 dargestellt. Der hintere Rumpfteil 10 setzt sich aus mehreren Einzelbestandteilen zusammen, nämlich u.a. einem Rumpfteil 13 und dem Behälter 11. In bevorzugter Ausgestaltung bildet das hintere Rumpfteil 10 eine austauschbare Einheit 12. Dies erleichtert das Nachladen und das Instandsetzen des Flugkörpers 1 nach einem Abfangversuch. Es können mehrere austauschbare Einheiten 12 bereitgehalten werden, so dass der Flugkörper 1 rasch wieder einsatzfertig gemacht werden kann.

Diese austauschbare Einheit 12 weist das Rumpfteil 13 auf, wobei an dem Rumpfteil 13 mehrere Ausstoßbuchsen 14 mit entsprechenden darin angeordneten Gewichten 15 angeordnet sind. Die Ausstoßbuchsen 14 und die Gewichte 15 sind im Bereich des Schwerpunkts des Flugkörpers 1 angeordnet. Die Ausstoßbuchsen 14 sind dabei derart ausgerichtet, dass die Gewichte 15 quer zur Flugrichtung und damit auch quer zur Längsrichtung des Flugkörpers 1 ausgestoßen werden können. Es ist denkbar, dass die Ausstoßbuchsen 14 dabei im Wesentlichen radial ausgerichtet sind oder dass die Ausstoßbuchsen 14 schräg nach hinten zeigen. Die Gewichte 15 dienen zum Aufspannen des Fangnetzes 9. Hierzu sind die Gewichte 15 mit dem Fangnetz 9 verbunden. Als Verbindung kann insbesondere ein Seil, ein Band oder ein anderes flexibles Verbindungsmittel 16 verwendet werden. Dieses Verbindungsmittel 16 ist einerseits mit einem Gewicht 15 und andererseits mit einem Umfang eines nicht näher bezeichneten Fangnetzes 9 verbunden. Vorzugsweise sind mindestens drei Gewichte 15 und entsprechend mindestens drei Ausstoßbuchsen 14 vorhanden. In der dargestellten Ausgestaltung werden vier Gewichte 15 und entsprechend vier Ausstoßbuchsen 14 verwendet. Das Fangnetz 9 kann im ausgebreiteten Zustand insbesondere viereckig, vorzugsweise quadratisch sein. In einer alternativer Ausgestaltung ist denkbar, ein dreieckiges, fünfeckiges, sechseckiges oder auch rundes Fangnetz 9 zu verwenden.

Das Rumpfteil 13 weist einen Hohlraum 17 auf, wobei innerhalb des Hohlraums 17 ein Fallschirm angeordnet ist. Der Hohlraum 17 ist in Richtung des Behälters 11 geöffnet. Der Fallschirm 18 ist über mindestens ein weiteres flexibles Verbindungsmittel 19 mit dem Fangnetz 9 und vorzugsweise mit dem Rumpfteil 13 über ein weiteres flexibles Verbindungsmittel 20 verbunden. Wenn nun wie im Folgenden beschrieben das Fangnetz 9 zusammen mit dem Fallschirm 18 ausgestoßen wird (vgl. Fig. 2), so wird der Flugkörper 1 und das Fangnetz 9 zusammen mit der ggf. eingefangenen Fremddrohne 21 sicher zu Boden gebracht.

Der Flugkörper 1 weist nun hier nicht dargestellte erste Mittel zum Abstoßen des Behälters 11 auf. Die Mittel können insbesondere an der dem Behälter 11 zugewandten Stirnseite des Rumpfteils 13 angeordnet sein. Diese Mittel können pneumatisch oder beispielsweise durch einen pyrotechnischen Treibsatz gebildet sein. Dieses Mittel ist mittels der Bordelektronik auslösbar. Die Ausstoßbuchsen 14 können ebenfalls mittels der Bordelektronik betätigt werden. Es ist denkbar, dass die Ausstoßbuchsen 14 ebenfalls durch pneumatische Mittel oder durch pyrotechnische Treibsätze bestätigbar sind.

Ferner ist ein Mittel zum Ausstoßen des Fallschirms 18 vorhanden. Diese dem Fangnetz 9, den Gewichten 15 und dem Fallschirm 18 zugeordnete Mittel können in beliebiger Sequenz ausgelöst werden.

Es darf nun anhand von Fig. 4 der Ablauf des Verfahrens zum Abfangen der Fremddrohne 21 näher erläutert werden. Zunächst wird der Flugkörper 1 vom Boden 22 aus gestartet. Am Boden kann beispielsweise ein Radarsystem oder ein anderes Sensorsystem angeordnet sein, dass das Eindringen der Fremddrohne 21 detektiert. Dieses System übermittelt über eine Funkverbindung 23 die Koordinaten und/oder den Richtungsvektor der Fremddrohne 21 dem Flugkörper 1. Es ist denkbar, dass dabei zunächst der Flugkörper 1 vom Boden aus gesteuert wird. An einem Punkt 24 entlang der Flugbahn 25 erfasst nun der Suchkopf 7 die Fremddrohne 21. Hiernach lenkt die Bordelektronik ohne äußeren Einfluss, d.h. ohne Nutzung der Funkverbindung 23 den Flugkörper 1 in Richtung der Fremddrohne 21. Es wird vorzugsweise durch den Suchkopf 7 oder durch die Sensorik am Boden 22 die Geschwindigkeit der Fremddrohne 21 bestimmt. Ferner wird vorzugsweise die Geschwindigkeit des Flugkörpers 1 bestimmt. In Abhängigkeit von dem Abstand des Flugkörpers 1 und insbesondere in Abhängigkeit von der Relativgeschwindigkeit zwischen der Fremddrohne 21 und dem Flugkörper 1 wird an einem Punkt 41 der Behälter 11 mit den beschriebenen Mitteln abgestoßen. Dies führt dazu, dass das Fangnetz 9 durch die Öffnung 26 (vgl. Fig. 3) im Boden 27 des Behälters 11 herausgezogen wird.

Zu einem späteren Zeitpunkt, an einem späteren Punkt 28 der Flugbahn werden danach die Gewichte 15 aus den Ausstoßbuchsen 14 herausgestoßen, wodurch das Fangnetz 9 aufgespannt wird. Dieser Zeitpunkt ist derart gewählt, dass hierdurch sicher die Fremddrohne 21 eingefangen wird. Die Flugbahn des Flugkörpers 1 ist dabei derart an die Flugbahn der Fremddrohne 21 angepasst, dass auch unter Berücksichtigung der Bremswirkung des Fangnetzes 9 auf den Flugkörper 1 die Fremddrohne 21 eingefangen wird. Durch das Einfangen der Fremddrohne 21 wird nun auch der Fallschirm 18 aus dem Hohlraum 17 herausgezogen und der Flugkörper 1 schwebt nun zusammen mit dem Fangnetz 9 und der eingefangenen Fremddrohne 21 zu Boden.

Es hat sich herausgestellt, dass es besonders vorteilhaft ist, dass zu unterschiedlichen Zeitpunkten der Behälter 11 und die Gewichte 15 abgestoßen werden, d.h. erst das Fangnetz 9 und danach zu einem späteren Zeitpunkt die Gewichte 15. Hierdurch wird zuerst das Fangnetz 9 entrollt und erst wenn das Fangnetz 9 im Wesentlichen den Behälter 11 verlassen hat, wird es durch die Gewichte 15 aufgespannt. Die Zeitdifferenz zwischen diesen zwei Zeitpunkten hängt dabei insbesondere von der Eigengeschwindigkeit des Flugkörpers 1 ab.

Im Folgenden darf nun eine erfindungsgemäße Startanordnung 29 erläutert werden.

Die Startanordnung 29 weist einen Startbehälter 30 auf, wobei der Flugkörper 1 zunächst in dem Startbehälter 30 angeordnet ist. Der Startbehälter 30 weist eine Öffnung 31 auf, die zunächst durch einen Deckel 32 verschlossen ist. Der Deckel 32 ist über ein Gelenk 33 schwenkbar an dem Startbehälter 30 angeordnet. Innerhalb des Startbehälters 30 sind mehrere Führungselemente 34 angeordnet, wobei die Führungselemente 34 im Wesentlichen U-förmig ausgestaltet sind, so dass in einem Schlitz 35 die Flügel 2 des Flugkörpers 1 gehalten sind. Der Flugkörper 1 ist in dem Startbehälter 30 dabei derart angeordnet, dass die Spitze bzw. der Bug des Flugkörpers 1 mit dem Antrieb nahe des Deckels 32 angeordnet ist und das Heck im Wesentlichen zwischen den Führungselementen 34 in der Nähe des Bodens 30B des Startbehälters 30 angeordnet ist. Der Deckel 32 weist an seiner Innenseite einen Dämpfer 36 auf. Der Dämpfer 36 liegt dabei der Spitze, d.h. dem Suchkopf 7 des Flugkörpers 1 gegenüber.

An der dem Gelenk 33 gegenüberliegenden Seite des Startbehälters 30 ist nun ein Verschlussmechanismus 37 angeordnet. Dargestellt ist hier ein Haken 38 des Verschlussmechanismus 37. Der Verschlussmechanismus 37 ist elektrisch beispielsweise mittels eines Servos betätigbar, so dass der Verschlussmechanismus 37 in einer Grundposition den Deckel 32 sicher verschließt und nach einer entsprechenden Aktivierung den Deckel 32 freigibt. Es ist denkbar, dass der Deckel 32 im Wesentlichen durch eine Feder oder dergleichen in den geöffneten Zustand geschwenkt wird. Alternativ ist denkbar, dass allein durch das Starten des Flugkörpers 1 der Deckel aufgedrückt wird.

Das Signal zum Öffnen des Deckels 32 wird nun von der Bordelektronik des Flugkörpers 1 an den Verschlussmechanismus 37 übermittelt. Hierzu ist der Flugkörper 1 mittels einer Verbindungsleitung 39 mit dem Verschlussmechanismus 37 gekoppelt. Der Flugkörper 1 ist wiederum über eine Funkverbindung 23 mit einer Bodenstation verbunden, so dass die Bodenstation das Signal zum Starten des Flugkörpers 1 gibt, die Bordelektronik automatisch über die Verbindungsleitung 39 ein Signal an den Verschlussmechanismus 37 sendet, dass der Deckel 32 nun geöffnet wird bzw. der Haken 38 nun zurückgezogen wird, um den Deckel 32 freizugeben. Die Verbindungsleitung 39 ist dabei in eine nicht näher dargestellte Buchse am Flugkörper 1 eingesteckt, so dass eine Datenverbindung zu der Bordelektronik hergestellt ist. Die Energie zum Öffnen bzw. zum Betätigen des Verschlussmechanismus 37 wird vorzugsweise über eine Stromversorgung 40 von außen zugeführt.

Diese Startanordnung 29 hat den Vorteil, dass die Startanordnung 29 den Flugkörper 1 sicher vor den äußeren Witterungsbedingungen schützen kann und gleichzeitig keine anfällige Elektronik umfasst, da diese durch die Bordelektronik des Flugkörpers 1 bereitgestellt wird. Dies ermöglicht eine preiswerte Herstellung der Startanordnung 29. Wenn nun das Signal zum Starten von der Bodenstation gegeben wird, so wird der Antrieb 5 aktiviert, d.h. der Propeller beginnt sich zu drehen und durch den entstehenden Schub wird der Deckel 32 zur Seite geschwenkt, so dass die Öffnung 31 des Startbehälters 30 freigegeben wird und der Flugkörper 1 aus dieser Öffnung 31 heraus ins Freie gelangt.

### Bezugszeichenliste:

- 1: Flugkörper
- 2: Flügel
- 3: Rumpf
- 4: Ruder
- 5: Antrieb
- 6: Propellerantrieb
- 7: Suchkopf
- 8: mittleres Rumpfteil
- 9: Fangnetz
- 10: hinteres Rumpfteil
- 11: Behälter
- 12: austauschbare Einheit
- 13: Rumpfteil
- 14: Ausstoßbuchsen
- 15: Gewichte
- 16: flexibles Verbindungsmittel
- 17: Hohlraum
- 18: Fallschirm
- 19: flexibles Verbindungsmittel
- 20: flexibles Verbindungsmittel
- 21: Fremddrohne
- 22: Boden
- 23: Funkverbindung
- 24: Punkt auf Flugbahn
- 25: Flugbahn
- 26: Öffnung
- 27: Boden
- 28: Punkt auf Flugbahn
- 29: Startanordnung
- 30: Startbehälter
- 31: Öffnung
- 32: Deckel
- 33: Gelenk
- 34: Führungselement
- 35: Schlitz
- 36: Dämpfer
- 37: Verschlussmechanismus
- 38: Haken
- 39: Verbindungsleitung
- 40: Stromversorgung
- 41: Punkt auf Flugbahn

## Patentansprüche

1. Startanordnung (29) mit einem Flugkörper (1) zum Abfangen von Fremddrohnen, wobei die Startanordnung (29) einen Startbehälter (30) mit einer Öffnung (31) aufweist, wobei der Flugkörper (1) innerhalb des Startbehälters (30) angeordnet oder anordbar ist, wobei der Flugkörper (1) einen Propellerantrieb (6) aufweist, wobei der Startbehälter (30) mit einem die Öffnung (31) verschließenden Deckel (32) ausgestattet ist, **dadurch gekennzeichnet, dass** der Flugkörper (1) den Propellerantrieb (6) in einem Bugbereich des Flugkörpers (1) aufweist, wobei der Startbehälter (30) und der Deckel (32) über einen betätigbaren Verschlussmechanismus (37) miteinander verbunden sind, wobei beim Betätigen des Verschlussmechanismus (37) der Verschlussmechanismus (37) den Deckel (32) freigibt und der Flugkörper (1) den Startbehälter (30) verlassen kann, wobei der Verschlussmechanismus (37) über eine Verbindungsleitung (39) mit einer Bordelektronik des Flugkörpers (1) gekoppelt ist, wobei mittels der Bordelektronik des Flugkörpers (1) ein Signal zum Öffnen des Deckels (32) an den Verschlussmechanismus (37) sendbar ist.

2. Startanordnung nach Anspruch 1, **dadurch gekennzeichnet, dass** der Startbehälter (30) in seinem Inneren mindestens ein, insbesondere mehrere Führungselemente (34) aufweist, wobei der Flugkörper (1) von den Führungselementen (34) geführt wird.

3. Startanordnung nach einem der vorstehenden Ansprüche, **dadurch gekennzeichnet, dass** die Startanordnung (29) eine Stromversorgung (40) aufweist, wobei die Stromversorgung (40) den elektrisch betätigbaren Verschlussmechanismus (37) speist.

4. Startanordnung nach einem der vorstehenden Ansprüche, **dadurch gekennzeichnet, dass** der Flugkörper (1) zum Abfangen von Fremddrohnen (21) ein Fangnetz (9) und einen Fallschirm (18) aufweist, wobei mehrere Gewichte (15) mit dem Fangnetz (9) verbunden sind, wobei das Fangnetz (9) vom Flugkörper (1) abstoßbar ist, wobei die Gewichte (15) vom Flugkörper (1) abstoßbar sind, wobei das Fangnetz (9) mittels eines ersten Mittels und die Gewichte (15) mittels eines zweiten Mittels abstoßbar sind, wobei die Gewichte (15) und das Fangnetz zu unterschiedlichen Zeitpunkten vom Flugkörper (1) abstoßbar sind.

5. Startanordnung nach Anspruch 4, **dadurch gekennzeichnet, dass** die Zeitdifferenz zwischen dem Abstoß des Fangnetzes (9) und der Gewichte (15) in Abhängigkeit von der aktuellen Eigengeschwindigkeit des Flugkörpers (1) wählbar ist.

6. Startanordnung nach einem der vorstehenden Ansprüche 4 oder 5, **dadurch gekennzeichnet, dass** das Fangnetz (9) in einem Behälter (11) angeordnet ist, wobei der Behälter (11) einen Heckbereich des Flugkörpers (1) bildet, wobei der Behälter mit dem Fangnetz (9) durch das erste Mittel abstoßbar ist.

7. Startanordnung nach Anspruch 6, **dadurch gekennzeichnet, dass** die Gewichte (15) in Ausstoßbuchsen (14) angeordnet sind, wobei die Ausstoßbuchsen (14) in Längsrichtung des Flugkörpers (1) gesehen vor dem Behälter (11) angeordnet sind.

8. Startanordnung nach Anspruch 7, **dadurch gekennzeichnet, dass** der Flugkörper (1) eine austauschbare Einheit (12) aufweist, wobei die austauschbare Einheit (12) das Fangnetz (9), die Gewichte (15) und die Ausstoßbuchsen (14) aufweist.

9. Startanordnung nach Anspruch 8, **dadurch gekennzeichnet, dass** die austauschbare Einheit (12) ein Rumpfteil (13) aufweist, wobei das Rumpfteil (13) einen Hohlraum (17) aufweist, wobei in dem Hohlraum (17) ein Fallschirm (18) angeordnet ist, wobei der Fallschirm (18) über ein flexibles Verbindungsmittel (19, 20) mit dem Rumpfteil (13) und/oder dem Fangnetz (9) verbunden ist.

10. Startanordnung nach Anspruch 9, **dadurch gekennzeichnet, dass** der Hohlraum (13) an den Behälter (11) angrenzt, wobei der Behälter (11) eine Öffnung (26) aufweist, wobei das Fangnetz (9) über flexible Verbindungsmittel (16, 19) mit den Gewichten (15) und/oder einem Fallschirm (18) verbunden ist und diese Verbindungsmittel (16, 19) oder das Fangnetz (9) durch die Öffnung (26) geführt sind.

11. Startanordnung nach Anspruch 10, **dadurch gekennzeichnet, dass** der Innendurchmesser des Behälters (11) größer als die Öffnung (26) ist.

12. Startanordnung nach einem der vorstehenden Ansprüche 6 bis 11, **dadurch gekennzeichnet, dass** das Fangnetz (9) in Form eines aufgewickelten Strangs im Behälter (11) angeordnet ist und somit eine Wicklung bildet, wobei ein mit den Gewichten (15) verbundenes Ende des Stranges in der Wicklung innen liegt und ein freies Strangende an der Wicklung außen liegt.

13. Startanordnung nach einem der vorstehenden Ansprüche, **dadurch gekennzeichnet, dass** der Flugkörper (1) die Form einer Rakete aufweist.

14. Startanordnung nach einem der vorstehenden Ansprüche, **dadurch gekennzeichnet, dass** der Flugkörper (1) mehrere, insbesondere mehr als drei umfänglich beabstandete Flügel (2) aufweist.

15. Startanordnung nach einem der vorstehenden Ansprüche, **dadurch gekennzeichnet, dass** der Propellerantrieb (6) in Flugrichtung vor dem Schwerpunkt des Flugkörpers (1) angeordnet ist.

16. Startanordnung nach einem der vorstehenden Ansprüche 4 bis 12, **dadurch gekennzeichnet, dass** die Gewichte (15) im Bereich des Schwerpunkts des Flugkörpers (1) angeordnet sind.

17. Startanordnung nach einem der vorstehenden Ansprüche, **dadurch gekennzeichnet, dass** die maximale Endgeschwindigkeit des Flugkörpers (1) mehr als 100 km/h, insbesondere mehr als 200 km/h beträgt.

18. Startanordnung nach einem der vorstehenden Ansprüche 4 bis 12 und 16, **dadurch gekennzeichnet, dass** das erste Mittel und/oder das zweite Mittel durch mindestens einen pyrotechnischen Treibsatz und/oder ein mit Druckluft arbeitendes Mittel gebildet sind.

19. Startanordnung nach einem der vorstehenden Ansprüche 9 bis 11, **dadurch gekennzeichnet, dass** ein Mittel zum Ausstoßen des Fallschirms (18) aus dem Hohlraum (13) vorhanden ist.

## Claims

1. Launching arrangement (29) with a missile (1) for intercepting hostile drones, wherein the launching arrangement (29) comprises a launch container (30) with an opening (31), wherein the missile (1) is, or can be, arranged within the launch container (30), wherein the missile (1) comprises a propeller drive (6), wherein the launch container (30) is fitted with a cover (32) which closes the opening (31), **characterized in that** the missile (1) comprises the propeller drive (6) in a bow region of the missile (1), wherein the launch container (30) and the cover (32) are connected to one another via an actuable closing mechanism (37), wherein the closing mechanism (37) releases the cover (32) when said closing mechanism (37) is actuated and the missile (1) can leave the launch container (30), wherein the closing mechanism (37) is coupled to on-board electronics of the missile (1) via a connecting line (39), wherein a signal for opening the cover (32) can be sent to the closing mechanism (37) by means of the on-board electronics of the missile (1).

2. Launching arrangement according to Claim 1, **characterized in that** the launch container (30) comprises in its interior at least one, in particular a plurality of, guide element(s) (34), wherein the missile (1) is guided by the guide elements (34).

3. Launching arrangement according to one of the preceding claims, **characterized in that** the launching arrangement (29) comprises a power supply (40), wherein the power supply (40) feeds the electrically actuable closing mechanism (37).

4. Launching arrangement according to one of the preceding claims, **characterized in that** the missile (1) for intercepting hostile drones (21) comprises a net (9) and a parachute (18), wherein a plurality of weights (15) is connected to the net (9), wherein the net (9) can be ejected from the missile (1), wherein the weights (15) can be ejected from the missile (1), wherein the net (9) can be ejected by means of a first means and the weights (15) can be ejected by means of a second means, wherein the weights (15) and the net can be ejected from the missile (1) at different points in time.

5. Launching arrangement according to Claim 4, **characterized in that** the time difference between the ejection of the net (9) and the weights (15) can be selected depending on the current air speed of the missile (1).

6. Launching arrangement according to one of the preceding Claims 4 or 5, **characterized in that** the net (9) is arranged in a container (11), wherein the container (11) forms a rear region of the missile (1), wherein the container with the net (9) can be ejected by the first means.

7. Launching arrangement according to Claim 6, **characterized in that** the weights (15) are arranged in ejector receptacles (14), wherein the ejector receptacles (14) are arranged in front of the container (11) seen in the longitudinal direction of the missile (1).

8. Launching arrangement according to Claim 7, **characterized in that** the missile (1) comprises a replaceable unit (12), wherein the replaceable unit (12) comprises the net (9), the weights (15) and the ejector receptacles (14).

9. Launching arrangement according to Claim 8, **characterized in that** the replaceable unit (12) comprises a fuselage part (13), wherein the fuselage part (13) comprises a hollow space (17), wherein a parachute (18) is arranged in the hollow space (17), wherein the parachute (18) is connected to the fuselage part (13) and/or the net (9) via a flexible connection means (19, 20).

10. Launching arrangement according to Claim 9, **characterized in that** the hollow space (13) abuts the container (11), wherein the container (11) comprises an opening (26), wherein the net (9) is connected to the weights (15) and/or a parachute (18) via flexible connection means (16, 19) and these connection means (16, 19) or the net (9) are guided through the opening (26).

11. Launching arrangement according to Claim 10, **characterized in that** the internal diameter of the container (11) is larger than the opening (26).

12. Launching arrangement according to one of the preceding Claims 6 to 11, **characterized in that** the net (9) is arranged in the container (11) in the form of a coiled rope and thus forms a winding, wherein an end of the rope connected to the weights (15) is found inside the winding and a free coil end is found on the outside of the winding.

13. Launching arrangement according to one of the preceding claims, **characterized in that** the missile (1) has the form of a rocket.

14. Launching arrangement according to one of the preceding claims, **characterized in that** the missile (1) comprises a plurality of, in particular more than three, circumferentially spaced wings (2).

15. Launching arrangement according to one of the preceding claims, **characterized in that** the propeller drive (6) is arranged in the flight direction in front of the centre of gravity of the missile (1).

16. Launching arrangement according to one of the preceding Claims 4 to 12, **characterized in that** the weights (15) are arranged in the region of the centre of gravity of the missile (1).

17. Launching arrangement according to one of the preceding claims, **characterized in that** the maximum terminal velocity of the missile (1) is over 100 km/hr, in particular over 200 km/hr.

18. Launching arrangement according to one of the preceding Claims 4 to 12 and 16, **characterized in that** the first means and/or the second means are formed by at least one pyrotechnic propellant and/or a means which operates using compressed air.

19. Launching arrangement according to one of the preceding Claims 9 to 11, **characterized in that** a means for ejecting the parachute (18) from the hollow space (13) is provided.

## Revendications

1. Ensemble de lancement (29) comportant un missile (1) servant à intercepter des drones étrangers, l'ensemble de lancement (29) comprenant un récipient de lancement (30) doté d'une ouverture (31), le missile (1) étant disposé ou pouvant être disposé à l'intérieur du récipient de lancement (30), le missile (1) comprenant un entraînement à hélice (6), le récipient de lancement (30) étant équipé d'un couvercle (32) fermant l'ouverture (31), **caractérisé en ce que** le missile (1) comprend l'entraînement à hélice (6) dans une zone avant du missile (1), le récipient de lancement (30) et le couvercle (32) étant connectés l'un à l'autre par le biais d'un mécanisme de fermeture (37) pouvant être actionné, le mécanisme de fermeture (37) libérant le couvercle (32) et le missile (1) pouvant sortir du récipient de lancement (30) en cas d'actionnement du mécanisme de fermeture (37), le mécanisme de fermeture (37) étant accouplé à une électronique de bord du missile (1) par le biais d'une ligne de connexion (39), un signal d'ouverture du couvercle (32) pouvant être envoyé au mécanisme de fermeture (37) au moyen de l'électronique de bord du missile (1).

2. Ensemble de lancement selon la revendication 1, **caractérisé en ce que** le récipient de lancement (30) comprend, à l'intérieur, au moins un, en particulier plusieurs éléments de guidage (34), le missile (1) étant guidé par les éléments de guidage (34).

3. Ensemble de lancement selon l'une des revendications précédentes, **caractérisé en ce que** l'ensemble de lancement (29) comprend une alimentation électrique (40), l'alimentation électrique (40) alimentant le mécanisme de fermeture (37) pouvant être actionné électriquement.

4. Ensemble de lancement selon l'une des revendications précédentes, **caractérisé en ce que** le missile (1) servant à intercepter des drones étrangers (21) comprend un filet d'interception (9) et un parachute (18), plusieurs poids (15) étant connectés au filet d'interception (9), le filet d'interception (9) pouvant être éjecté du missile (1), les poids (15) pouvant être éjectés du missile (1), le filet d'interception (9) pouvant être éjecté à l'aide d'un premier moyen et les poids (15) pouvant être éjectés à l'aide d'un deuxième moyen, les poids (15) et le filet d'interception pouvant être éjectés du missile (1) à différents instants.

5. Ensemble de lancement selon la revendication 4, **caractérisé en ce que** la différence temporelle entre l'éjection du filet d'interception (9) et des poids (15) peut être sélectionnée en fonction de la vitesse propre instantanée du missile (1).

6. Ensemble de lancement selon l'une des revendications précédentes 4 ou 5, **caractérisé en ce que** le filet d'interception (9) est disposé dans un récipient (11), le récipient (11) formant une zone arrière du missile (1), le récipient doté du filet d'interception (9) pouvant être éjecté à l'aide du premier moyen.

7. Ensemble de lancement selon la revendication 6, **caractérisé en ce que** les poids (15) sont disposés dans des douilles d'éjection (14), les douilles d'éjection (14) étant disposées devant le récipient (11) vues dans la direction longitudinale du missile (1).

8. Ensemble de lancement selon la revendication 7, **caractérisé en ce que** le missile (1) comprend une unité remplaçable (12), l'unité remplaçable (12) comprenant le filet d'interception (9), les poids (15) et les douilles d'éjection (14).

9. Ensemble de lancement selon la revendication 8, **caractérisé en ce que** l'unité remplaçable (12) comprend une partie de fuselage (13), la partie de fuselage (13) comprenant une cavité (17), un parachute (18) étant disposé dans la cavité (17), le parachute (18) étant connecté à la partie de fuselage (13) et/ou au filet d'interception (9) par le biais d'un moyen de connexion (19, 20) souple.

10. Ensemble de lancement selon la revendication 9, **caractérisé en ce que** la cavité (13) est adjacente au récipient (11), le récipient (11) comprenant une ouverture (26), le filet d'interception (9) étant connecté aux poids (15) et/ou à un parachute (18) par le biais de moyens de connexion (16, 19) souples et ces moyens de connexion (16, 19) ou le filet d'interception (9) étant guidés à travers l'ouverture (26).

11. Ensemble de lancement selon la revendication 10, **caractérisé en ce que** le diamètre intérieur du récipient (11) est plus grand que l'ouverture (26).

12. Ensemble de lancement selon l'une des revendications précédentes 6 à 11, **caractérisé en ce que** le filet d'interception (9) est disposé dans le récipient (11) sous la forme d'une corde enroulée et forme donc un enroulement, une extrémité de la corde connectée aux poids (15) étant située à l'intérieur de l'enroulement et une extrémité de corde libre étant située à l'extérieur de l'enroulement.

13. Ensemble de lancement selon l'une des revendications précédentes, **caractérisé en ce que** le missile (1) présente la forme d'une fusée.

14. Ensemble de lancement selon l'une des revendications précédentes, **caractérisé en ce que** le missile (1) comprend plusieurs, en particulier plus de trois ailes (2) espacées de manière périphérique.

15. Ensemble de lancement selon l'une des revendications précédentes, **caractérisé en ce que** l'entraînement à hélice (6) est disposé devant le centre de gravité du missile (1) dans la direction de vol.

16. Ensemble de lancement selon l'une des revendications précédentes 4 à 12, **caractérisé en ce que** les poids (15) sont disposés dans la région du centre de gravité du missile (1).

17. Ensemble de lancement selon l'une des revendications précédentes, **caractérisé en ce que** la vitesse de pointe maximale du missile (1) vaut plus de 100 km/h, en particulier plus de 200 km/h.

18. Ensemble de lancement selon l'une des revendications précédentes 4 à 12 et 16, **caractérisé en ce que** le premier moyen et/ou le deuxième moyen sont formés par au moins une charge propulsive pyrotechnique et/ou un moyen fonctionnant à l'air comprimé.

19. Ensemble de lancement selon l'une des revendications précédentes 9 à 11, **caractérisé en ce qu'**un moyen d'éjection du parachute (18) hors de la cavité (13) est présent.
